# FASCICULE DE BREVET EUROPEEN

(11) **EP 3 339 708 B1**
(45) Date de publication et mention de la délivrance du brevet: **17.04.2019**
(21) Numéro de dépôt: 17206580.7
(22) Date de dépôt: 12.12.2017
(51) Int. Cl.: F16L 37/084

(54) **CONNECTEUR DE SÉCURITÉ À VERROUILLAGE AUTOMATIQUE**
SICHERHEITSSTECKER MIT AUTOMATISCHER VERRIEGELUNG
SAFETY CONNECTOR WITH AUTOMATIC LOCKING

(30) Priorité: 20.12.2016 FR 1662870
(43) Date de publication de la demande: 27.06.2018
(73) Titulaire: Schrader S.A.S., 25300 Pontarlier (FR)
(72) Inventeur: ROBERT, Sébastien, 25000 Besancon (FR); GRESSET, Benoit, 39600 Arbois (FR)
(74) Mandataire: Novagraaf Technologies

(56) Documents cités:
- WO-A1-2016/038226
- US-A1- 2006 267 341

## Description

L'invention concerne un connecteur de sécurité pour la formation d'une connexion fluidique avec un connecteur complémentaire. L'invention concerne en outre un ensemble comportant un tel connecteur.

Dans le domaine de la connexion rapide de lignes fluidiques, notamment celles destinées aux lignes de carburant dans les véhicules automobiles ou autre, il est nécessaire que :
1- le connecteur puisse être verrouillé de manière automatique, si et seulement s'il est dans la bonne position de connexion, et que ce verrouillage puisse être visuellement contrôlé.
2- le connecteur ne puisse pas être déverrouillé si la ligne fluidique est sous pression fluidique.

Actuellement, il existe des connecteurs qui tentent de répondre à la problématique précédente. Toutefois, ils présentent des inconvénients. Sur certains connecteurs, le verrouillage est possible lors de plusieurs phases de vies ou positions de connexion du connecteur. Or, pour garantir la sécurité de la connexion réalisée, il ne doit y avoir qu'une seule position du connecteur dans laquelle le verrouillage est possible. Sur d'autres connecteurs, le verrouillage implique une opération spécifique que doit réaliser l'opérateur, opération spécifique qui, si elle n'est pas réalisée peut entraîner un risque sérieux d'arrachement du connecteur lors de la mise en pression de ligne fluidique dans laquelle il est inséré. Au surplus, ce verrouillage est réalisé par au moins trois pièces, augmentant d'autant les risques de défaillance de la connexion ainsi réalisée, ainsi que les coûts de revient.

Le document WO2016038226 divulgue un exemple connecteur de sécurité du type ci-dessus.

Un but de l'invention est de fournir un connecteur de sécurité pour la formation d'une connexion fluidique sécurisée avec un connecteur complémentaire, le connecteur de sécurité comportant un moyen de verrouillage de la connexion fluidique agencé de sorte à pouvoir passer d'une position armée, dans laquelle la connexion fluidique est réalisable, à une position verrouillée, dans laquelle la connexion fluidique réalisée est sécurisée en empêchant le verrouillage si la position du connecteur de sécurité relativement au connecteur complémentaire n'est pas conforme, le connecteur de sécurité comportant en outre un moyen de stockage d'énergie d'entraînement du moyen de verrouillage dans le sens de sa position armée vers sa position verrouillée, caractérisé en ce que le connecteur comporte un bossage de blocage conditionnel d'un déverrouillage du moyen de verrouillage en position de verrouillage.

Avantageusement, mais facultativement, le connecteur de sécurité selon l'invention présente en outre au moins l'une des caractéristiques techniques additionnelles suivantes :
- le moyen de verrouillage comporte un tiroir reçu à coulissement dans un logement du connecteur de sécurité ;
- le logement s'étend de manière perpendiculaire à un conduit fluidique du connecteur de sécurité, le tiroir s'étendant en travers du conduit fluidique ;
- le tiroir comporte un orifice oblong s'étendant en regard du conduit fluidique ;
- le moyen de verrouillage comporte au moins un doigt d'encliquetage de la connexion fluidique ;
- le moyen de stockage d'énergie d'entraînement comprend un élément déformable élastiquement formant ressort ;
- l'élément déformable élastiquement est une lame de ressort ;
- la lame de ressort est venue de matière avec le tiroir ;
- le connecteur comporte un moyen de retenu débrayable de la position armée du moyen de verrouillage ;
- le moyen de retenu débrayable comporte un épaulement ;
- le connecteur comporte en outre un moyen de visualisation de la position verrouillé du moyen de verrouillage ; et,
- le connecteur comporte une fonction intégrée parmi un connecteur à mécanisme, un connecteur à clapet, un connecteur à capteur, un connecteur à régulateur.

Il est prévu aussi, selon l'invention, un ensemble comportant un connecteur de sécurité présentant aux moins l'une des caractéristiques techniques précédentes et un connecteur complémentaire destinés à coopérer l'un avec l'autre pour former une connexion fluidique, le connecteur complémentaire comportant une collerette agencée de sorte à interagir avec le moyen de verrouillage du connecteur de sécurité, lors d'une réalisation de la connexion fluidique. Avantageusement, mais facultativement, l'ensemble selon l'invention présente au moins l'une des caractéristiques techniques additionnelles suivantes :
- lors d'une réalisation de la connexion fluidique, la collerette agit sur le doigt d'encliquetage ; et,
- lors d'une réalisation de la connexion fluidique, la collerette débraye le moyen de retenu débrayable du moyen de verrouillage.

D'autres caractéristiques et avantages de l'invention apparaîtront lors de la description ci-après d'un mode de réalisation d'un connecteur de sécurité selon l'invention. Aux dessins annexés :
- les figures la à 1c sont, respectivement, des vues en coupe et tridimensionnelles de trois-quarts arrière et trois-quarts avant d'un connecteur de sécurité selon un mode de réalisation de l'invention, en position armée ;
- la figure 2 est une tridimensionnelle en coupe du connecteur des figures la à 1c ;
- les figures 3 et 4 sont, respectivement, des vues de côté et de dessus d'un moyen de verrouillage du connecteur des figures la à 2 ;
- les figures 5 et 6 sont, respectivement des vues tridimensionnelles de trois-quarts arrière et avant du moyen de verrouillage des figures 3 et 4 ;
- les figures 7a à 7C sont, respectivement, des vues en coupe et tridimensionnelles de trois-quarts arrière et trois-quarts avant d'un ensemble comportant le connecteur de sécurité des figures la à 2 et un connecteur complémentaire, en position armée et verrouillée ;
- les figures 8a à 8d sont des vues coupes d'applications du connecteur de sécurité des figures la à 2.

En référence aux figures la à 1c, nous allons décrire un connecteur de sécurité 1 selon l'invention pour la formation d'une connexion fluidique sécurisée avec un connecteur complémentaire. Le connecteur de sécurité 1 selon l'invention comporte un corps de connecteur 4 de forme sensiblement tubulaire s'étendant longitudinalement selon un axe X. Coaxialement à cet axe X, le corps de connecteur 4 est traversé par un conduit fluidique 41 s'étendant depuis une ouverture d'insertion 43 par laquelle le connecteur complémentaire est destiné, ici, à être introduit dans le connecteur de sécurité 1 selon l'invention, lors d'une réalisation d'une connexion fluidique sécurisée. Le corps de connecteur 4 comporte au niveau de l'ouverture d'insertion 43, une base 47, ici, parallélépipédique dont une face inférieure (sur les figures) comporte l'ouverture d'insertion 43. Dans un plan perpendiculaire à l'axe X, la base 47 comporte un logement 42 traversant de part en part la base 47 depuis une face latérale avant 471 vers une face latérale arrière 472 opposée et parallèle à la face latérale avant 471. Ainsi le logement 42 s'étend de manière perpendiculaire au conduit fluidique 41 Le logement 42 présente, ici une section rectangulaire.

Au niveau de la face latérale arrière 472, le logement 42 comporte un épaulement 7 s'étendant en saillie dans le logement 42 depuis une portion d'une paroi supérieure interne du logement 42 et une portion d'une première paroi latérale interne du logement. L'épaulement 7 est, ici, situé entre la face latérale arrière 472 et le conduit fluidique 41. En section dans un plan perpendiculaire à l'axe X longitudinal, l'épaulement 7 présente une forme triangulaire dont un premier côté longe la première paroi latérale interne du logement 42 dont il s'étend en saillie, un deuxième côté longe la face latérale arrière 472, le troisième côté étant dans le logement 42 en regard du conduit fluidique 41. Le sommet entre les deuxième et troisième côtés est cassé de sorte que l'épaulement 7 ne s'étend, depuis la première paroi latérale interne du logement 42, que sur une partie d'une première moitié d'une ouverture que forme le logement 42 avec la face latérale arrière 472. D'autre part, le troisième côté, en variante de réalisation, ne s'étende pas de manière perpendiculaire depuis la paroi supérieure interne du logement 42, mais est incliné selon un angle α par rapport à l'axe X du connecteur de sécurité 1 selon l'invention, de sorte à former une demi queue d'aronde. Cela permet un meilleur retenu d'un moyen de verrouillage 3 en position armée. De manière symétrique en miroir, le logement 42 comporte un deuxième épaulement 7 s'étendant en saille depuis une portion d'une deuxième paroi latérale interne du logement 42, s'étendent en regard de la première paroi latérale interne du logement 42.

Au niveau de la face latérale avant 471, le logement 42 comporte un bossage de blocage conditionnel 8 s'étendant en saillie dans le logement 42 depuis une portion 6 d'une paroi inférieure interne du logement 42 et une portion d'une première paroi latérale interne du logement. Le bossage de blocage conditionnel 8 est, ici, situé entre la face latérale avant 471 et le conduit fluidique 41. En section dans un plan perpendiculaire à l'axe X longitudinal, le bossage de blocage conditionnel 8 présente une forme rectangulaire. Ce bossage de blocage conditionnel va permettre d'éviter tout déverrouillage intempestif de la connexion fluidique une fois celle-ci réalisée alors que le connecteur de sécurité est sous tension, ou qu'une pression fluidique règne au sein de la connexion fluidique réalisée.

Au-dessus du logement 42, le conduit fluidique comporte une chambre de réception 46 surmontée par une partie supérieure du conduit fluidique 41. Dans la partie supérieure du conduit fluidique 41, ce dernier comporte des moyens d'étanchéité sous la forme ici de deux joints toriques 5 superposés faisant saillie dans le conduit fluidique 41.

Au droit de la face latérale arrière 472, le corps de connecteur 4 du connecteur de sécurité 1 selon l'invention comporte une face d'appui 44. Cette face d'appui 44 s'étend, ici, parallèlement à l'axe X longitudinal.

Au niveau de la face latérale avant 471, la base 47 comporte une échancrure 45 aménagée dans une épaisseur de la paroi supérieure interne du logement 42 permettant un accès visuel sur une portion 6 en regard de l'échancrure 45 d'une paroi inférieure interne du logement 42.

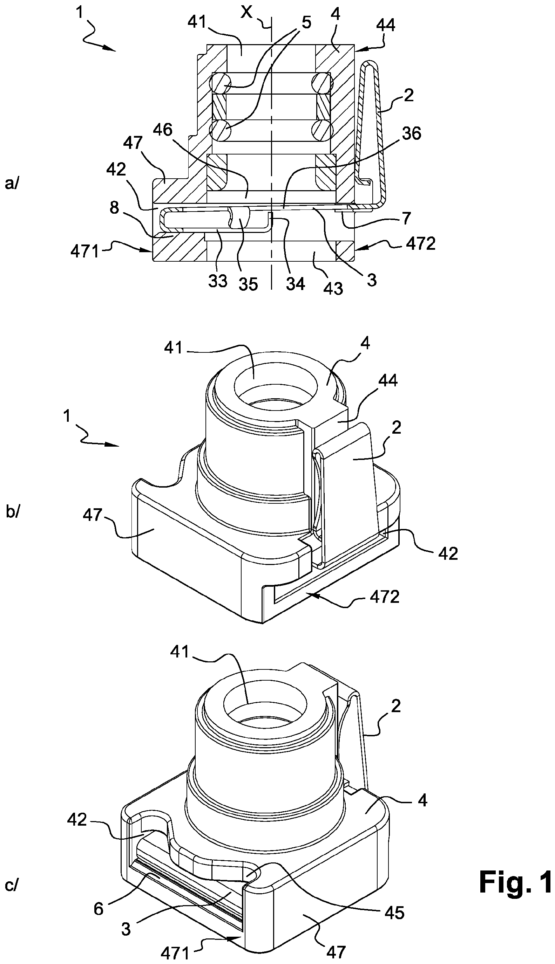

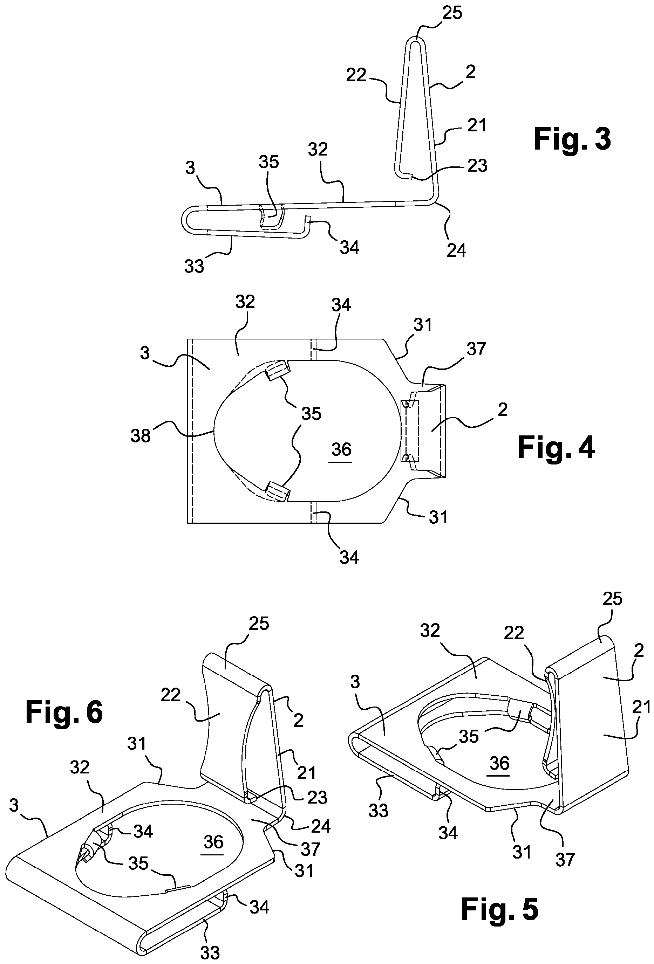

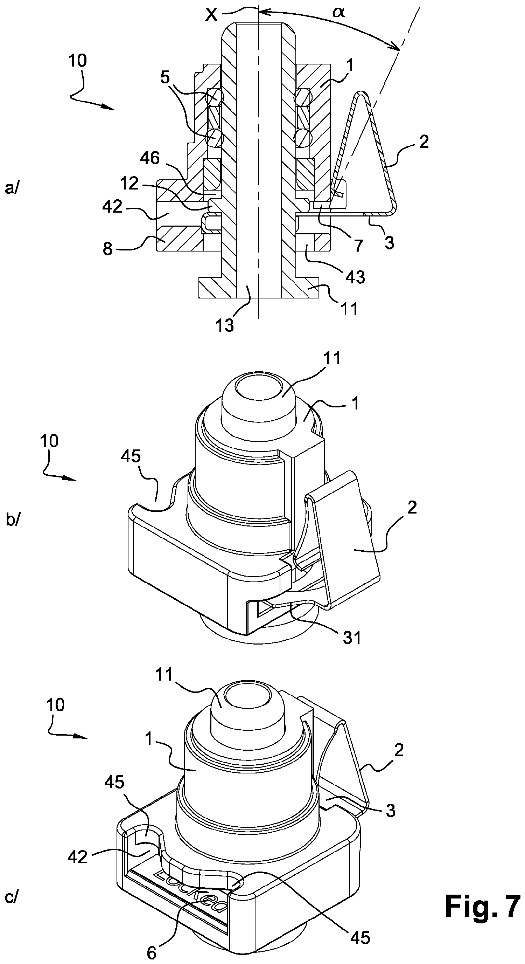

D'autre part, le connecteur de sécurité 1 selon l'invention comporte en outre un moyen de verrouillage 3 de la connexion fluidique agencé de sorte à pouvoir passer d'une position armée, illustrée aux figures 1-2 et dans laquelle la connexion fluidique est réalisable, à une position verrouillée, illustrée à la figure 7 et dans laquelle la connexion fluidique réalisée est sécurisée. D'autre part, le connecteur de sécurité 1 selon l'invention comporte un moyen de stockage d'énergie d'entraînement 2 du moyen de verrouillage 3 dans le sens de sa position armée vers sa position verrouillée. Ici, le moyen de verrouillage 3 et le moyen de stockage d'énergie d'entraînement 2 sont venus de matière l'un avec l'autre et vont être décrits plus en détail en référence aux figures 3 à 6. L'ensemble des moyens de verrouillage 3 et de stockage d'énergie d'entraînement 2 forme une épingle.

Le moyen de verrouillage 3 est, ici, un tiroir comportant un flasque 32. D'un côté, le flasque 32 se prolonge par une fourche 33 qui est repliée en dessous du flasque 32 de sorte que la fourche 33 s'étende en regard et à distance du flasque 34. La fourche 33 comporte ici deux branches dont les extrémités libres 34 sont recourbées vers le flasque 32 de sorte à former des cales d'épaisseur sur lesquelles le flasque 32 vient en appui lors d'une déformation due à une insertion du connecteur complémentaire dans le connecteur de sécurité 1 selon l'invention, comme cela sera décrit ultérieurement. D'un côté opposé à celui comportant la fourche 33, le flasque 32 comporte deux biseaux 31 encadrant une langue 37. Enfin, le flasque 32 comporte un orifice sensiblement oblong 36. Il est à noter que la fourche 33 présente une forme de ces branches qui ne s'étend pas dans l'orifice oblong 36. Au niveau d'une périphérie, l'orifice oblong 36 comporte, ici, deux doigts d'encliquetage 35 positionnés de manière symétrique en miroir l'un par rapport à l'autre. Les doigts d'encliquetage 35 s'étendent ici vers la fourche 33. D'autre part, l'orifice oblong 36 comporte une portion périphérique 38 de limitation du mouvement de verrouillage, cette portion étant située au niveau du côté opposée à la langue 37.

Au niveau de la langue 37, le moyen de verrouillage 3 est relié au moyen de stockage d'énergie d'entraînement 2 au niveau d'un bord 24 de celui-ci. Le moyen de stockage d'énergie d'entraînement 2 comporte une première portion de lame 21 s'étendant depuis le bord 24. Au niveau d'un bord opposé au bord 24, le moyen de stockage d'énergie d'entraînement 2 se poursuit avec une pliure 25 puis une deuxième lame 22 repliée en regard et à distance de la première lame 21. La deuxième lame 22 se termine par une extrémité libre 23 repliée vers la première lame 21. L'extrémité libre 23 repliée forme un moyen de limitation d'une déformation de la pliure 25 lors d'un armement du moyen de verrouillage 3. L'ensemble formé par les première 21 et deuxième 22 lames et la pliure 25 constitue un élément déformable élastiquement formant ressort, et plus particulièrement une lame de ressort. La première lame 21 est positionnée de sorte à être perpendiculaire au flasque 32, la pliure 25 et la deuxième lame 22 étant situées au-dessus du flasque 32.

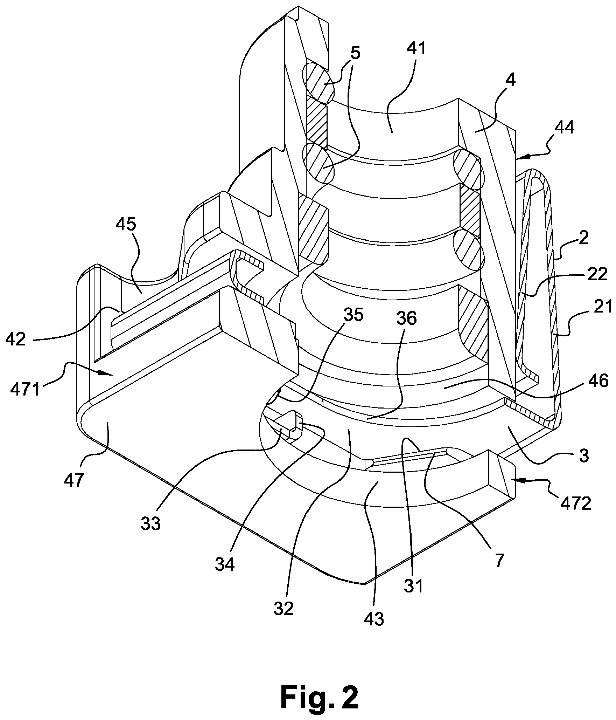

Lors d'un montage, l'épingle est positionnée dans le corps de connecteur 4. Le tiroir est inséré dans le logement 42 à coulissement en faisant pénétré le pli que forme le flasque 32 et la fourche 33 par l'orifice que forme le logement 42 avec la face latérale 472 arrière, la fourche 33 glissant contre la paroi interne inférieure du logement 42. Lors de cette insertion, le flasque 32 frotte contre les épaulements 7, déformant élastiquement le pli du flasque 32 et de la fourche 33. L'insertion se poursuivant, la deuxième lame 22 vient au contact de la face d'appui 44 du corps de connecteur 4. L'insertion continuant, la lame de ressort que forme les première 21 et deuxième 22 lames et la pliure 25 se déforme élastiquement, stockant ainsi de l'énergie. L'insertion continue jusqu'à ce que les biseaux 31 du flasque 32 dépassent les épaulements 7, le flasque ne frottant plus contre ces derniers, le pli revient à sa position non déformée relevant ainsi le flasque 32 dans le logement 42. L'effort d'insertion est alors relâché, la lame de ressort exerce, du fait de sa déformation élastique, un effort contraire qui tend à faire ressortir le tiroir du logement 42. Ce retrait est stoppé lorsque les biseaux 31 du flasque 32 viennent en appui contre les épaulements 7 comme cela est illustré en figure 2. Le moyen de verrouillage 3 est alors en position armée. Dans cette position armée, le pli entre le flasque 32 et la fourche 33 recouvre la portion 6 en regard de l'échancrure 45 de la paroi inférieure interne du logement 42. D'autre part l'orifice oblong 36 est en regard du conduit fluidique 41, les branches de la fourche 33 étant de part et d'autre de l'ouverture d'insertion 43. Dans la position armée le flasque 33 est en appui sur le bossage de blocage conditionnel 8.

Nous allons maintenant décrire, en référence à la figure 7, la réalisation d'une connexion fluidique entre le connecteur de sécurité 1 selon l'invention qui vient d'être décrit et un connecteur complémentaire 11. Ce dernier est de forme tubulaire cylindrique de révolution et comporte un conduit fluidique 13 coaxiale. Il comporte une collerette 12 s'étendant en saillie de manière centrifuge. Cette collerette 12 présente une épaisseur et un diamètre externe adaptée au connecteur de sécurité 1 selon l'invention avec lequel le connecteur complémentaire 11 est destiné à coopérer. En particulier, la collerette présente une forme adaptée à la chambre de réception 46 du connecteur ainsi qu'à l'orifice oblong 36 du moyen de verrouillage 3. Dans le cas contraire, il y aura un empêchement du verrouillage si la position du connecteur de sécurité 1 selon l'invention relativement au connecteur complémentaire 11 n'est pas conforme.

L'insertion s'effectue par l'introduction d'une extrémité du connecteur complémentaire 11 par l'ouverture d'insertion 43, puis le passage de l'extrémité dans l'orifice oblong 36 du moyen de verrouillage 3 en position armée, puis à travers la chambre de réception 46 pour se poursuivre à travers la partie supérieure du conduit fluidique 41 du connecteur de sécurité 1 selon l'invention. La collerette 12 passe alors par l'ouverture d'insertion 43, puis elle vient en contact avec les doigts d'encliquetage 35 avant de passer à travers l'orifice oblong 36. Le contact avec les doigts d'encliquetage 35 induit une translation dans le logement 42 du moyen de verrouillage 3 en direction de la face latérale avant 471, les biseaux 31 n'étant plus alors en contact avec les épaulements 7. Après le passage de l'orifice oblong 36, la collerette 12 se retrouve dans la chambre de réception 46 du connecteur de sécurité 1 selon l'invention, au-dessus du flasque 32. La connexion fluidique est réalisée.

Le verrouillage de la connexion fluidique s'effectue par recul du connecteur complémentaire 11 dans le connecteur de sécurité 1 selon l'invention. Ce recul est soit effectué par un opérateur réalisant la connexion en tirant sur le connecteur complémentaire 11 comme pour l'extraire du connecteur sécurisé selon l'invention, soit de la première mise en pression de la connexion. Le recul ainsi induit fait que la collerette 12 vient appuyer sur le flasque 32, rapprochant ce dernier de la fourche 33 et libérant les biseaux 31 des épaulements 7. Le moyen de stockage d'énergie d'entraînement 2 libère alors l'énergie emmagasinée lors de la mise en position armée du moyen de verrouillage 3 : la deuxième lame 22 appuyant sur la face d'appui 44 force le tiroir à coulisser dans le logement 42 en direction de la face latérale arrière 472. Ce coulissement s'arrête lorsque la portion périphérique 38 de limitation du mouvement de verrouillage de l'orifice oblong 36 vient en contact avec le connecteur complémentaire 11. Suite à ce coulissement, le pli entre la fourche 33 et le flasque 32 découvre la portion 6 en regard de l'échancrure 45 de la paroi inférieure interne du logement 42, laissant apparaître un témoin de verrouillage aménagé sur cette portion 6 par l'échancrure 45.

Le déverrouillage s'effectue en appuyant sur le moyen de stockage d'énergie d'entrainement 2 au niveau du bord 24. Lors du déverrouillage, le moyen de verrouillage 3 vient en appui sur le bossage de blocage conditionnel 8 puis glisse au-dessus de celui-ci si le connecteur se sécurité 1 selon l'invention n'est ni en tension, ni qu'une pression de fluide règne au sein de la connexion fluidique formée par le connecteur de sécurité 1 selon l'invention et le connecteur complémentaire 11. En effet, dans ces deux cas, la collerette 12 est appui sur le flasque 32 et écrase celui-ci vers la fourche 33 : si le moyen de verrouillage recul dans son logement 42 depuis la position de verrouillage, il vient en butée contre le bossage de blocage conditionnel 8 sans pouvoir se soulever de sorte à pouvoir glisser au-dessus. Cela évite des déverrouillages intempestifs dans les deux cas précédents.

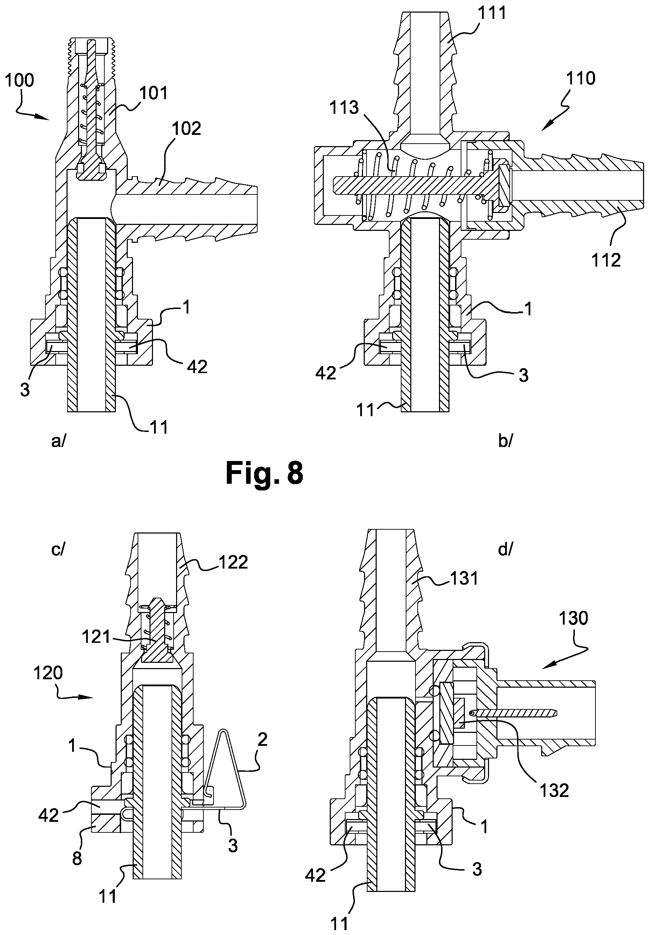

En référence à la figure 8, nous allons brièvement décrire des applications possibles du connecteur de sécurité 1 selon l'invention.

En figure 8a, le connecteur de sécurité 1 selon l'invention est adapté à un connecteur à mécanisme 100 comportant un port de sortie 102 et un port de charge 101 comportant un clapet piloté d'accès au circuit fluidique.

En figure 8b, le connecteur de sécurité 1 selon l'invention est adapté à un connecteur à régulateur 110 comportant un port de sortie 111, ainsi qu'une soupape tarée 113 vers un port d'alimentation 112.

En figure 8c, le connecteur de sécurité 1 selon l'invention est adapté à un connecteur à clapet 120 comportant un port d'entrée équipé d'un clapet anti retour 121

En figure 8d, le connecteur de sécurité 1 selon l'invention est adapté à un connecteur à capteur 130 comportant un port de sortie 131 ainsi qu'un capteur de pression 132.

Bien entendu, de nombreuses modifications peuvent être apportées à l'invention sans pour autant sortir du cadre de celle-ci.

## Revendications

1. Connecteur de sécurité (1) pour la formation d'une connexion fluidique sécurisée avec un connecteur complémentaire (11), le connecteur de sécurité comportant un moyen de verrouillage (3) de la connexion fluidique agencé de sorte à pouvoir passer d'une position armée, dans laquelle la connexion fluidique est réalisable, à une position verrouillée, dans laquelle la connexion fluidique réalisée est sécurisée en empêchant le verrouillage si la position du connecteur de sécurité relativement au connecteur complémentaire n'est pas conforme, et un moyen de stockage d'énergie d'entraînement (2) du moyen de verrouillage dans le sens de sa position armée vers sa position verrouillée, **caractérisé en ce que** le connecteur de sécurité comporte en outre un bossage de blocage conditionnel (8) d'un déverrouillage du moyen de verrouillage en position de verrouillage.

2. Connecteur selon la revendication 1, **caractérisé en ce que** le moyen de verrouillage comporte un tiroir reçu libre à coulissement dans un logement (42) du connecteur de sécurité.

3. Connecteur selon la revendication 2, **caractérisé en ce que** le logement s'étend de manière perpendiculaire à un conduit fluidique (41) du connecteur de sécurité, le tiroir s'étendant en travers du conduit fluidique.

4. Connecteur selon l'une des revendications 2 à 3, **caractérisé en ce que** le tiroir comporte un orifice oblong (36) s'étendant en regard du conduit fluidique.

5. Connecteur selon l'une des revendications 1 à 4, **caractérisé en ce que** le moyen de verrouillage comporte un doigt d'encliquetage (35) de la connexion fluidique.

6. Connecteur selon l'une des revendications 1 à 5, **caractérisé en ce que** le moyen de stockage d'énergie d'entraînement comprend un élément déformable (21,22) élastiquement formant ressort.

7. Connecteur selon la revendication 6, caractérisé en ce l'élément déformable élastiquement est une lame de ressort.

8. Connecteur selon l'une des revendications 1 à 7, **caractérisé en ce que** le connecteur comporte un moyen de retenu débrayable (7) de la position armée du moyen de verrouillage.

9. Connecteur selon la revendication 8, **caractérisé en ce que** le moyen de retenu débrayable comporte un épaulement.

10. Connecteur selon l'une des revendications 1 à 9, **caractérisé en ce qu'**il comporte en outre un moyen de visualisation (6,45) de la position verrouillé du moyen de verrouillage.

11. Connecteur selon l'une des revendications 1 à 10, **caractérisé en ce qu'**il comporte une fonction intégrée parmi un connecteur à mécanisme (100), un connecteur à clapet (120), un connecteur à capteur (130), un connecteur à régulateur (110).

12. Ensemble (10) comportant un connecteur de sécurité (1) selon l'une des revendications 1 à 11 et un connecteur complémentaire (11) destinés à coopérer l'un avec l'autre pour former une connexion fluidique, **caractérisé en ce que** le connecteur complémentaire comporte une collerette (12) agencée de sorte à interagir avec le moyen de verrouillage (3) du connecteur de sécurité, lors d'une réalisation de la connexion fluidique.

13. Ensemble selon la revendication 12, **caractérisé en ce que**, lors d'une réalisation de la connexion fluidique, la collerette agit sur le doigt d'encliquetage.

14. Ensemble selon l'une des revendications 12 à 13, **caractérisé en ce que**, lors d'une réalisation de la connexion fluidique, la collerette débraye le moyen de retenu débrayable du moyen de verrouillage.

## Patentansprüche

1. Sicherheitsstecker (1) für die Bildung einer gesicherten fluidischen Verbindung mit einem komplementären Stecker (11), wobei der Sicherheitsstecker ein Verriegelungsmittel (3) für die fluidische Verbindung umfasst, das so angeordnet ist, dass von einer gerüsteten Position, in der die fluidische Verbindung ausführbar ist, in eine verriegelte Position übergegangen werden kann, in der die ausgeführte fluidische Verbindung gesichert wird, indem die Verriegelung verhindert wird, wenn die Position des Sicherheitssteckers in Bezug auf den komplementären Stecker nicht angemessen ist, und ein Mittel zur Speicherung der Antriebsenergie (2) des Verriegelungsmittels in Richtung von seiner gerüsteten Position in seine verriegelte Position, **dadurch gekennzeichnet, dass** der Sicherheitsstecker des Weiteren einen Buckel zum bedingten Blockieren (8) einer Entriegelung des Verriegelungsmittels in Verriegelungsposition umfasst.

2. Stecker nach Anspruch 1, **dadurch gekennzeichnet, dass** das Verriegelungsmittel einen Einschub umfasst, der frei gleitend in einer Aufnahme (42) des Sicherheitssteckers aufgenommen wird.

3. Stecker nach Anspruch 2, **dadurch gekennzeichnet, dass** sich die Aufnahme senkrecht zu einem fluidischen Kanal (41) des Sicherheitssteckers erstreckt, wobei sich der Einschub quer durch den fluidischen Kanal erstreckt.

4. Stecker nach einem der Ansprüche 2 bis 3, **dadurch gekennzeichnet, dass** der Einschub ein Langloch (36) umfasst, das sich gegenüber dem fluidischen Kanal erstreckt.

5. Stecker nach einem der Ansprüche 1 bis 4, **dadurch gekennzeichnet, dass** das Verriegelungsmittel einen Rastfinger (35) für die fluidische Verbindung umfasst.

6. Stecker nach einem der Ansprüche 1 bis 5, **dadurch gekennzeichnet, dass** das Mittel zur Speicherung der Antriebsenergie ein elastisch verformbares Element (21, 22) beinhaltet, das eine Feder bildet.

7. Stecker nach Anspruch 6, **dadurch gekennzeichnet, dass** das elastisch verformbare Element eine Blattfeder ist.

8. Stecker nach einem der Ansprüche 1 bis 7, **dadurch gekennzeichnet, dass** der Stecker ein auskuppelbares Haltemittel (7) der gerüsteten Position des Verriegelungsmittels umfasst.

9. Stecker nach Anspruch 8, **dadurch gekennzeichnet, dass** das auskuppelbare Haltemittel einen Absatz umfasst.

10. Stecker nach einem der Ansprüche 1 bis 9, **dadurch gekennzeichnet, dass** er des Weiteren ein Anzeigemittel (6, 45) der verriegelten Position des Verriegelungsmittels umfasst.

11. Stecker nach einem der Ansprüche 1 bis 10, **dadurch gekennzeichnet, dass** er eine integrierte Funktion aus einem Stecker mit Mechanismus (100), einem Stecker mit Klappe (120), einem Stecker mit Sensor (130), einem Stecker mit Regler (110) umfasst.

12. Einheit (10), umfassend einen Sicherheitsstecker (1) nach einem der Ansprüche 1 bis 11 und einen komplementären Stecker (11), die dazu bestimmt sind, miteinander zusammenzuwirken, um eine fluidische Verbindung zu bilden, **dadurch gekennzeichnet, dass** der komplementäre Stecker einen Kragen (12) umfasst, der so angeordnet ist, dass er mit dem Verriegelungsmittel (3) des Sicherheitssteckers bei einer Ausführung der fluidischen Verbindung interagiert.

13. Einheit nach Anspruch 12, **dadurch gekennzeichnet, dass** bei einer Ausführung der fluidischen Verbindung der Kragen auf den Rastfinger einwirkt.

14. Einheit nach einem der Ansprüche 12 bis 13, **dadurch gekennzeichnet, dass** bei einer Ausführung der fluidischen Verbindung der Kragen das auskuppelbare Haltemittel des Verriegelungsmittels auskuppelt.

## Claims

1. Secure connector (1) for the formation of a secure fluid connection with a complementary connector (11), the secure connector comprising a means (3) for locking the fluid connection, arranged in such a way as to be able to go from an armed position, in which the fluid connection can be made, to a locked position, in which the fluid connection made is secured by preventing the locking if the position of the secure connector relative to the complementary connector is not matching, and a means (2) for storing energy for driving the locking means in the direction from its armed position towards its locked position, **characterised in that** the secure connector further comprises a boss (8) for conditional blocking of an unlocking of the locking means in the locking position.

2. Connector according to claim 1, **characterised in that** the locking means comprises a slide received free to slide in a housing (42) of the secure connector.

3. Connector according to claim 2, **characterised in that** the housing extends perpendicularly to a fluid duct (41) of the secure connector, the slide extending across the fluid duct.

4. Connector according to one of claims 2 to 3, **characterised in that** the slide comprises an oblong orifice (36) extending facing the fluid duct.

5. Connector according to one of claims 1 to 4, **characterised in that** the locking means comprises a snap-on pin (35) for the fluid connection.

6. Connector according to one of claims 1 to 5, **characterised in that** the means for storing drive energy comprises an elastically deformable element (21, 22) forming a spring.

7. Connector according to claim 6, **characterised in that** the elastically deformable element is a spring leaf.

8. Connector according to one of claims 1 to 7, **characterised in that** the connector comprises a means (7) for releasable retention of the armed position of the locking means.

9. Connector according to claim 8, **characterised in that** the releasable-retention means comprises a shoulder.

10. Connector according to one of claims 1 to 9, **characterised in that** it further comprises a means (6, 45) for displaying the locked position of the locking means.

11. Connector according to one of claims 1 to 10, **characterised in that** it comprises an integrated function out of a connector (100) with a mechanism, a connector (120) with a valve, a connector (130) with a sensor, a connector (110) with a regulator.

12. Assembly (10) comprising a secure connector (1) according to one of claims 1 to 11 and a complementary connector (11) intended to cooperate with one another in order to form a fluid connection, **characterised in that** the complementary connector comprises a flange (12) arranged in such a way as to interact with the locking means (3) of the secure connector, during a realisation of the fluid connection.

13. Assembly according to claim 12, **characterised in that**, during a realisation of the fluid connection, the flange acts on the snap-on pin.

14. Assembly according to one of claims 12 to 13, **characterised in that**, during a realisation of the fluid connection, the flange releases the means for releasable retention of the locking means.
